# EUROPÄISCHE PATENTSCHRIFT

(11) **EP 3 629 468 B1**
(45) Veröffentlichungstag und Bekanntmachung des Hinweises auf die Patenterteilung: **19.01.2022**
(21) Anmeldenummer: 18197208.4
(22) Anmeldetag: 27.09.2018
(51) Int. Cl.: H02P 1/02, H02P 1/40, H02P 1/28

(54) **VERFAHREN ZUM BETREIBEN EINER DREHSTROMMASCHINE**
METHOD FOR OPERATING AN AC MACHINE
PROCÉDÉ DE FONCTIONNEMENT D'UNE MACHINE TRIPHASÉE

(43) Veröffentlichungstag der Anmeldung: 01.04.2020
(73) Patentinhaber: Siemens Aktiengesellschaft, 80333 München (DE)
(72) Erfinder: Nannen, Hauke, 90443 Nürnberg (DE); Zatocil, Heiko, 90469 Nürnberg (DE)

(56) Entgegenhaltungen:
- EP-A1- 2 061 144
- DE-A1- 10 003 692
- US-A- 3 818 294

## Beschreibung

Die Erfindung betrifft ein Verfahren zum Betreiben einer Drehstrommaschine, ein entsprechendes Computerprogrammprodukt, einen Drehstromsteller sowie ein Antriebssystem mit einem solchen Drehstromsteller.

Eine Drehstrommaschine kann grundsätzlich als ein elektrischer Generator oder als ein elektrischer Motor betrieben werden. Ersterer wandelt mechanische Energie in Drehstrom, Letzterer Drehstrom in mechanische Energie um. Drehstrommotoren werden gemäß der IEC-Norm 60034 anhand ihres Wirkungsgrades in verschiedene Effizienzklassen IE 1 bis IE 4 eingeteilt (IEC = International Electrotechnical Commission; IE = International Efficiency). Gerade im unteren Leistungsbereich bis ca. 20 kW lassen sich alle definierten Wirkungsgrade für Elektromotoren mit der Asynchronmaschine nur schwer einhalten, weshalb vermehrt die Verwendung von Permanentmagneten im Rotor angestrebt wird, z.B. als Permanenterregte Synchronmaschine (= PMSM) .

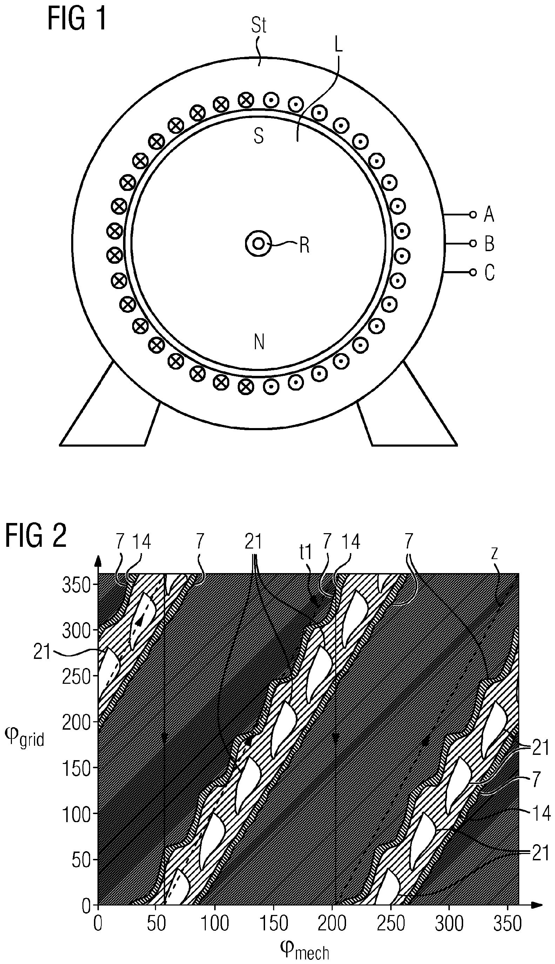

Fig. 1 zeigt eine schematische Darstellung einer solchen Permanenterregten Synchronmaschine in einer Ausführung als Innenpolmaschine mit einem auch Ständer genannten Stator St, welcher Ständerwicklungen mit Wicklungssträngen für die drei Phasen eines Drehstromnetzes umfasst. Dabei sind die Ständerwicklungen mittels Phasenanschlüssen A, B, C mit den drei Phasen des Drehstromnetzes elektrisch verbindbar. Die Synchronmaschine weist außerdem im Innenraum des Stators St einen auch Rotor oder Polrad genannten Läufer L auf, welcher einen magnetischen Nordpol N und einen magnetischen Südpol S umfasst und welcher um eine Rotationsachse R rotierbar gelagert ist. Die Darstellung in Fig. 1 ist lediglich beispielhaft zu verstehen und hat keine einschränkende Wirkung auf den Schutzbereich des beanspruchten Gegenstands. Durchwandert der Drehstrom in den Ständerwicklungen eine volle zeitliche Periode, dreht sich das Magnetfeld des Stators St um eine volle Polteilung (ein Nord- und ein Südpol) weiter. Bei zwei Polpaaren im Stator entspricht das einer mechanischen Drehung von 180 Grad. Da magnetische Pole nur paarweise auftreten können, ist die kleinste Polpaarzahl p = 1 (ein Nordpol und ein Südpol). Adäquat dazu beträgt die Polzahl 2 p. Eine 4-polige Maschine besitzt somit 2 Polpaare, d.h. die Polpaarzahl p = 2. Die Rotationsgeschwindigkeit des Statorfeldes in einem Motor mit zwei Polpaaren ist gegenüber derjenigen in einem Motor mit nur einem Polpaar nur halb so groß, obwohl sich die Frequenz des speisenden Stromes nicht ändert. Die Polpaarzahl p des Motors, üblich sind Motoren mit ein bis vier Polpaaren, bestimmt also die Drehfrequenz des Statorfeldes und somit die Drehzahl bzw. Drehfrequenz des Läufers, der dem Magnetfeld im Stator folgt. Die Drehfrequenz des Läufers sinkt mit steigender Polpaarzahl.

Der Maschinentyp PMSM ermöglicht zwar eine hohe Energieeffizienz, jedoch sind der Start sowie der Betrieb am starren Netz nicht ohne weiteres möglich. Um dies zu ermöglichen, kann ein Dämpferkäfig im Läufer der Maschine vorgesehen werden. Der Dämpferkäfig ermöglicht zwar einen sicheren Hochlauf am starren Netz, jedoch führt die Kombination der Flüsse von Dämpferkäfig und Permanentmagneten zu hohen Anlaufströmen.

Ebenso ist der Betrieb an einem geeigneten leistungselektronischen Stellglied, wie zum Beispiel einem Frequenzumrichter (= FU) oder Sanftstarter, möglich. Hier stellt insbesondere der Einsatz eines Sanftstarters, auch Softstarter oder Sanftanlaufgerät genannt, eine kostenfreundliche Lösung zum Hochlauf einer PMSM an einem "starren Netz" dar, d.h. an einem Drehstromnetz mit einer festen Netzfrequenz. Als Sanftanlauf werden Maßnahmen zur Leistungsbegrenzung beim Einschalten eines elektrischen Gerätes, beispielsweise eines elektrischen Motors, bezeichnet. Bei herkömmlichen Sanftanlaufgeräten für Asynchronmaschinen wird beim Einschalten des Motors die am Motor anliegende elektrische Spannung reduziert und langsam bis zur vollen Netzspannung erhöht, z. B. mittels Phasenanschnitts. Dieses Verfahren ist aber nicht dazu geeignet, PMSM zu starten.

In der Dissertation von Dr. Marcel Benecke, Universität Magdeburg, 2012, mit dem Titel "Anlauf von energieeffizienten Synchronmaschinen mit Drehstromsteller" wird eine Lösung zum Hochlauf der Permanenterregten Synchronmaschine an einem Sanftstarter vorgestellt. Das in dieser Arbeit vorgestellte Verfahren benötigt jedoch den aktuellen Polradwinkel der Maschine, so dass die für diese Arbeit verwendeten Motoren mit einem entsprechenden Gebersystem ausgestattet werden mussten. Unter einem Geber versteht man Drehzahl- und Lagegeber, welche die mechanischen Größen Drehzahl und Lage des Polrads, d.h. des Läufers, erfassen. Ihre Signale sind erforderlich, um die Regler mit Istwerten zu versorgen und die vorhandenen Drehzahl- und Lageregelkreise zu schließen. Für die vektoriellen Regelverfahren bei Drehstromantrieben dienen die Drehzahl- und Lagesignale auch als wichtige Eingangsgröße für den Stromregelkreis. Der Geber erfasst in diesem Fall die Drehzahl und/oder Lage unmittelbar an der Motorwelle.

Das Gebersystem wirkt sich negativ auf die Kosten und die Verfügbarkeit des Systems aus, was derzeit eine Sanftstarterlösung für hocheffiziente Motoren unattraktiv macht. Aus diesen Gründen ist ein Verfahren zum Hochlauf ohne Geber bevorzugt.

Ein Verfahren zum Hochlauf ohne Geber ist beispielsweise aus WO2018/086688A1 (Siemens AG) 17.05.2018 bekannt. Dabei wird der Rotor aus einer bekannten initialen Position mit einem maximalen Drehmoment mittels Zündung von Thyristoren gedreht, eine durch die Drehung des Rotors induzierte Spannung wird gemessen, und ein optimaler Zündwinkel der Synchronmaschine wird ermittelt. Dieses Verfahren ermöglicht einen Start der Maschine ohne ein Drehgebersystem, sieht jedoch eine dem Starten vorausgehende Ausrichtung des Rotors vor. Ein solches geberloses Verfahren zur Ausrichtung einer Drehstrommaschine ist in WO2018/072810A1 (Siemens AG) 26.04.2018 beschrieben.

Mit zunehmender Motordrehzahl nimmt die Differenz zwischen der elektrischen Netzdrehzahl, entsprechend einer Netzfrequenz des Drehstromnetzes von üblicherweise 50 Hz oder 60 Hz, und der Motordrehzahl ab. Dies hat zur Folge, dass sich der Differenzwinkel Δ_ϕ zwischen dem elektrischem Netzwinkel ϕ_grid und dem Motorwinkel ϕ_mech ebenso langsam ändert.

Fig. 2 zeigt ein Konturdiagramm des maximal möglichen mittleren Drehmoments M_mean, im Folgenden auch einfach als mittleres Drehmoment M mean bezeichnet, in Abhängigkeit von dem Netzwinkel ϕ_grid und dem Motorwinkel ϕ_mech bei Wahl des optimalen Zündzeitpunktes der Thyristoren, welcher durch den Algorithmus des Benecke-Verfahrens ermittelt wird, welches in der oben erwähnten Dissertation von Herrn Dr. Benecke beschrieben ist. Die Darstellung in Fig. 2 bezieht sich auf einen Beispielmotor mit einer Polpaarzahl von p = 2. Bei einer Motordrehzahl von 25 U/sec = 1500 U/min hat der Motor seine Maximaldrehzahl erreicht, und der Rotor läuft synchron zum Netz. Dargestellt sind Isolinien bei den Werten 7, 14 und 21 Nm. Die in Fig. 2 am dunkelsten dargestellten Bereiche, auch als "Drehmomenttal" bezeichnet, in denen das mittlere Drehmoment M_mean kleiner als 7 Nm ist, sind für eine Beschleunigung des Motors weniger brauchbar, da hier ein kleines positives Drehmoment erzielbar ist; sie umfassen auch diejenigen Bereiche, in denen das Drehmoment M_mean negativ ist oder der Strom größer als ein vorgegebenes Stromlimit wäre, d.h. wo eine Zündung der Thyristoren definitiv keinen Sinn macht. Ein Stromlimit, das einen maximal zulässigen Strom definiert, dient der Energieeffizienz sowie dem Schutz der elektrischen Komponenten.

Die in Fig. 2 weiß dargestellten Bereiche, auch als "Drehmomentberg" bezeichnet, in denen das mittlere Drehmoment M_mean größer als 21 Nm ist, sind für eine Zündung der Thyristoren optimal geeignet, um den Motor effektiv zu beschleunigen: in den weißen Bereichen ist das mögliche Drehmoment maximal. Die dazwischen liegenden Bereiche, d.h. die hellgrauen Bereiche zwischen 7 und 14 Nm und die noch helleren Bereiche zwischen 14 und 21 Nm, sind desto besser für eine Beschleunigung des Motors geeignet, je größer das darin erreichbare mittlere Drehmoment M_mean ist.

Als punktierte Linie Z dargestellt ist in Fig. 2 der Zeitverlauf von Netz- und Motorwinkel beim Hochlauf des Motors; der Zeitverlauf ist durch die Pfeile auf der punktierten Linie Z dargestellt. Hierbei handelt es sich lediglich um eine schematische Darstellung eines Zeitabschnitts, welche Verformungen der punktierten Linie Z durch Beschleunigungsvorgänge außer Acht lässt, um die Zusammenhänge möglichst klar zu erläutern. Wenn die punktierte Linie Z den Maximalwert 360 Grad auf der Skala des elektrischen Netzwinkels ϕ_grid erreicht, wird der Verlauf bei dem Minimalwert 0 Grad auf der Skala des elektrischen Netzwinkels ϕ_grid fortgesetzt: das ist durch die beiden senkrecht nach unten zeigenden Pfeile in Fig. 2 angedeutet. Solange die Drehzahl des Rotors knapp unterhalb der Synchrondrehzahl, hier: 1500 U/min, liegt, verläuft der Netz- und Motorwinkel, wie durch die punktierte Linie Z im Bereich des Motorwinkels ϕ_mech = 0 bis ca. 130° dargestellt, in den Isolinien von 14 und größer. Hier kann dauerhaft durch Zündungen ein positiver Drehmomentenbeitrag erreicht werden. Bei weiter ansteigender Rotordrehzahl wandert die Linie Z ab Motorwinkeln von ϕ_mech = ca. 130° jedoch langsam in einen Bereich, in dem kein positives Drehmoment mehr erzielt werden kann. Hier sinkt die Drehzahl wieder ab. t1 markiert den Beginn der Phase, in der kein positives Drehmoment mehr erzielt werden kann.

Dieser Sachverhalt hat zur Folge, dass der Sanftstarter bei Motordrehzahlen nahe der synchronen Netzdrehzahl, hier: 1500 U/min, immer weniger Möglichkeiten zur Zündung der Thyristoren findet und immer längere Pausen zwischen Pulsblöcken einfügt. Während dieser Zeit befindet sich das System in einem "Drehmomenttal" aus Fig. 2, und der Zünd-Algorithmus wartet, bis er wieder auf einen "Drehmomentberg" aus Fig. 2 trifft.

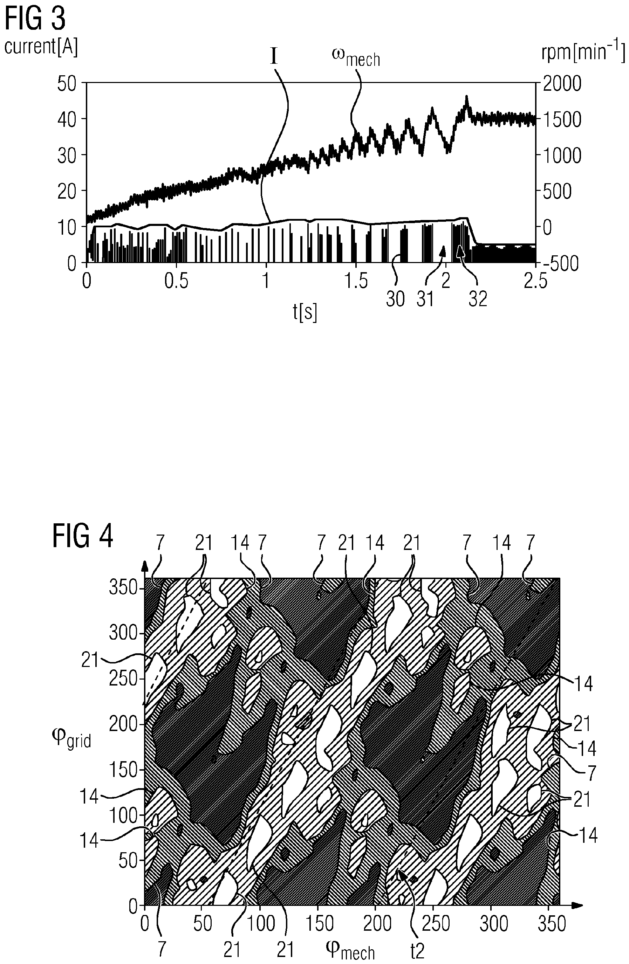

Fig. 3 zeigt ein Diagramm, das den Hochlauf einer PMSM beschreibt, mit einer Stromstärke-Zeit-Kurve und einer ω_mech-Zeit-Kurve, wobei der Betrag des Stroms I der Statorphasen in der Einheit Ampere und die mechanischen Winkelgeschwindigkeit ω_mech des Rotors in der Einheit 1/min über der Zeit in der Einheit Sekunden aufgetragen sind. Zusätzlich sind auf der x-Achse die Zündzeitpunkte 30 der Thyristoren angegeben, die, wenn sie zeitlich kurz hintereinander erfolgen, sogenannte Pulsblöcke 32 bilden. Im Zeit-Bereich zwischen t = 1,5 s und t = 2 s erkennt man, dass durch eine Häufung von Zündzeitpunkten der Thyristoren gebildete Pulsblöcke 32 eine signifikante Beschleunigung des Rotors, d.h. eine Zunahme der mechanischen Winkelgeschwindigkeit ω_mech, hervorrufen. Die Pulsblöcke 32, d.h. eine gehäufte Zündung von Thyristoren zur Erzeugung eines positiven Drehmomentes, korrelieren mit einem Drehmomentberg in Fig. 2. Analog dazu korreliert eine Pulspause 31, d.h. ein Fehlen eines Pulsblocks 32, mit einem Drehmomenttal in Fig. 2.

Die bei Motordrehzahlen nahe der synchronen Netzdrehzahl immer länger werdenden Pulspausen 31 zwischen den Pulsblöcken 32 führen beim Hochlauf eines Motors an einem Sanftstarter zu einem sogenannten "Drehzahl-Ripple", d.h. einer Welligkeit der mechanischen Drehzahl ω_mech, die in Fig. 3 im Zeit-Bereich zwischen t = 1,5 s und t = 2 s gut zu erkennen ist. EP2061144A1 (Rongxin Power Electronic Co., Ltd.) 20. Mai 2009 offenbart ein Verfahren nach dem Oberbegriff des unabhängigen Anspruchs und beschreibt eine Motor-Beschleunigung mittels DFC (= Direct Frequency Control), wobei der Motor in 3 Stufen beschleunigt wird.

Es ist eine Aufgabe der Erfindung, ein verbessertes Verfahren zum Betreiben einer Drehstrommaschine, insbesondere einer permanenterregten Synchronmaschine, bereitzustellen.

Diese Aufgabe wird erfindungsgemäß durch ein Verfahren mit den in Anspruch 1 angegebenen Merkmalen gelöst. Es handelt sich um ein Verfahren, welches zum Betreiben einer permanenterregten Synchronmaschine geeignet ist. Das Verfahren kann auch bei anderen Drehstrommaschinen zum Einsatz kommen, z.B. einer Synchronmaschine mit einem elektrisch erregten Läufer, oder einer Asynchronmaschine. Die Synchronmaschine weist einen Rotor auf. Die Synchronmaschine weist einen Stator auf, welcher eine dreiphasige Statorwicklung aufweist und an ein Drehstromnetz angeschlossen ist. Dabei sind die Phasen des Drehstromnetzes leitend mit den Statorwicklungen verbunden. Der Stator ist mittels einer ersten Halbleiter-Schaltungsanordnung so mit dem Drehstromnetz verbunden, dass ein in einer ersten Drehrichtung rotierendes, erstes Drehfeld im Stator generiert werden kann. Und der Stator ist mittels einer zweiten Halbleiter-Schaltungsanordnung so mit dem Drehstromnetz verbunden, dass ein in einer der ersten Drehrichtung entgegen gerichteten Drehrichtung rotierendes zweites Drehfeld im Stator generiert werden kann. Dabei weist die Synchronmaschine außerdem eine Steuereinheit auf, welche zum Stellen der Halbleiter der ersten und der zweiten Halbleiter-Schaltungsanordnung dient. Das Stellen von Halbleitern umfasst das elektrische Schalten eines Halbleiters, z.B. eines Transistors, eines Thyristors oder eines Triacs, derart, dass der Halbleiter Strom leitet (leitender Zustand) oder nicht leitet (sperrender Zustand). Gemäß der Erfindung stellt die Steuereinheit die Halbleiter in einer Weise, dass der Rotor durch Strompulse sowohl des ersten als auch des zweiten Drehfeldes in der ersten Drehrichtung beschleunigt wird.

Zur Bestimmung eines geeigneten Zündzeitpunktes der Halbleiter werden wiederholt ein aktueller Polradwinkel, d.h. der Lagewinkels des Rotors, eine aktuelle Rotordrehzahl ω_mech, z. B. abgeleitet aus dem Lagewinkels des Rotors, eine aktuelle Netzphasenlage des Drehstromnetzes, d.h. die Netzspannungsphasenlage in wenigstens einer der Phasen des Drehstromnetzes, und die aktuellen Statorphasenströme ermittelt. Unter Verwendung des aktuellen Polradwinkels, der aktuellen Rotordrehzahl, der aktuellen Netzphasenlage und der aktuellen Statorphasenströme wird in der Steuereinheit ein Drehmomentverlauf eines auf den Rotor wirkenden Drehmoments jeweils in einem Zündzeitraum für alle möglichen Zündfälle vorausberechnet, und unter Verwendung der vorausberechneten Drehmomentverläufe für jedes Thyristorpaar entschieden, ob es gezündet wird. Die Festlegung der Zündzeitpunkte erfolgt anhand des Rotor-Lagewinkels und der Netzspannungsphasenlage derart, dass ein positives Drehmoment erzeugt wird.

Die Erfindung basiert auf der Erkenntnis, dass zur Beschleunigung des Rotors einer elektrischen Maschine einem Sanftstarter zusätzliche Zeitpunkte zum Zünden der Thyristoren zur Verfügung stehen, wenn nicht nur ein erstes rotierendes Drehstromnetz, sondern zusätzlich auch ein gegendrehendes Drehstromnetz am Stator der Maschine anliegen. Im Falle einer derart geänderten Topologie, dass nicht nur ein in eine erste Richtung drehendes Drehfeld, sondern auch ein gegendrehendes Drehfeld an der Maschine anliegt, ändert sich der Verlauf aus Fig. 2 also derart, dass der Algorithmus nun weitere Zündoptionen hat, mit denen der Rotor beschleunigt werden kann. Die "Drehmomenttäler" des Systems können kompensiert und somit Pulspausen bei Drehzahlen nahe der Synchrondrehzahl vermieden oder zumindest regelmäßig unterbrochen werden.

Beispielsweise können zwei Phasen des Drehstromnetzes wahlweise miteinander getauscht werden und somit ein gegenrotierendes Drehfeld an der Drehstrommaschine angelegt werden. Andere Verschaltungen mit ähnlichem Effekt sind hierbei ebenso denkbar: Um die Anzahl der zusätzlich benötigten Thyristoren zu verringern, ist es neben einer 3-phasigen Topologie denkbar, die neue Topologie auf Geräte mit nur zwei schaltbaren Phasen zu übertragen. Hierdurch wird im Vergleich zur bekannten dreiphasigen Halbleiter-Schalter eines Sanftstarters lediglich ein weiteres antiparalleles Thyristorpaar benötigt

Vorteilhafte Ausgestaltungen und Weiterbildungen der Erfindung sind in den abhängigen Ansprüchen angegeben.

Gemäß einer bevorzugten Ausgestaltung der Erfindung sind nur zwei Phasen des Drehstromnetzes durch die erste und zweite Halbleiter-Schaltungsanordnung stellbar. Durch die Einsparung von Halbleiterschaltern, insbesondere Thyristoren, auf der dritten Phase stellt diese 2-phasige Variante gegenüber der 3-phasigen Variante eine kostengünstigere Variante, bei der jede der drei Phasen durch Halbleiterschalter stellbar ist, dar.

Gemäß einer bevorzugten Ausgestaltung der Erfindung ist die Drehstrommaschine eine permanenterregte Synchronmaschine.

Gemäß einer bevorzugten Ausgestaltung der Erfindung ist die Drehstrommaschine eine permanenterregte Synchronmaschine mit einem Dämpferkäfig. Ein Dämpferkäfig bringt einen Asynchronanteil in eine Synchronmaschine mit dem Vorteil einer allgemeinen Verbesserung des Hochlaufs. Konkret führt der Dämpferkäfig bei einer mit einem Sanftstarter betriebenen PMSM zu einer Dämpfung im System, da der damit generierbare Fluss nicht so starr wie bei einem Permanentmagneten ist.

Gemäß einer bevorzugten Ausgestaltung der Erfindung umfasst der Drehstromsteller eine Einrichtung zur Bestimmung der Drehzahl des Rotors der Synchronmaschine, eine Einrichtung zur Bestimmung der Phasenlage des Drehstromnetzes und/oder eine Einrichtung zur Bestimmung wenigstens eines Teils der Statorströme.

Gemäß einer bevorzugten Ausgestaltung der Erfindung ist die Steuerungseinrichtung ausgestaltet, aus den bestimmten Werten einen Drehmomentverlauf für die Synchronmaschine für einen festlegbaren Zeitraum bei Anschaltung wenigstens eines Teils der Halbleitersteller vorauszuberechnen und anhand der Vorausberechnung einen Schaltzeitpunkt zu ermitteln, zu dem Halbleiter der Halbleiter-Schaltungsanordnungen leitend geschaltet werden (Thyristor-Zündzeitpunkt).

Die skizzierte Aufgabenstellung wird auch durch ein erfindungsgemäßes Computerprogrammprodukt gelöst. Das Computerprogrammprodukt ist in einer Steuereinheit ausführbar ausgebildet. Das Computerprogrammprodukt kann als Software oder Firmware in einem Speicher speicherbar und durch ein Rechenwerk ausführbar ausgebildet sein. Alternativ oder ergänzend kann das Computerprogrammprodukt auch zumindest teilweise als festverdrahtete Schaltung ausgebildet sein, beispielsweise als ASIC (= application-specific integrated circuit). Das Computerprogrammprodukt ist dazu ausgebildet, Messwerte zu empfangen, auszuwerten und Befehle an Komponenten einer Motorsteuervorrichtung, insbesondere eines Sanft-starters, zu erzeugen. Erfindungsgemäß ist das Computerprogrammprodukt dazu ausgebildet, mindestens eine Ausführungsform des skizzierten Verfahrens zum Betreiben einer Drehstrommaschine, insbesondere einer permanenterregten Synchronmaschine, umzusetzen und durchzuführen. Dabei kann das Computerprogrammprodukt sämtliche Teilfunktionen des Verfahrens in sich vereinigen, also monolithisch ausgebildet sein. Alternativ kann das Computerprogrammprodukt auch segmentiert ausgebildet sein und jeweils Teilfunktionen auf Segmente verteilen, die auf separater Hardware ausgeführt werden. Beispielsweise kann ein Teil des Parameterbestimmungsverfahrens in einem Sanftstarter durchgeführt werden und ein anderer Teil des Parameterbestimmungsverfahrens in einer übergeordneten Steuereinheit, wie beispielsweise einer SPS (= Speicherprogrammierbare Steuerung), einem Handparametriergerät oder einer Computer-Cloud.

Ein anderer Aspekt der Erfindung ist ein Drehstromsteller zum Betrieb einer Drehstrommaschine, insbesondere einer permanenterregten Synchronmaschine, mit drei Kontakten zum Anschließen an die Phasen eines Drehstromnetzes; drei Kontakten zum Anschließen an die Statorwindungen der Drehstrommaschine; einer ersten Halbleiter-Schaltungsanordnung zur Ausbildung eines in einer ersten Drehrichtung rotierenden, ersten Drehfeldes in einem Stator der Drehstrommaschine; einer zweiten Halbleiter-Schaltungsanordnung zur Ausbildung eines in einer der ersten Drehrichtung entgegen gerichteten Drehrichtung rotierenden zweiten Drehfeldes im Stator der Drehstrommaschine; und einer Steuereinheit zur Steuerung der ersten und zweiten Halbleiter-Schaltungsanordnung, die ausgestaltet ist zur Durchführung des oben beschriebenen Verfahrens.

Gemäß einer bevorzugten Ausgestaltung der Erfindung ist die Steuereinheit ein Mikroprozessor.

Ein anderer Aspekt der Erfindung ist ein Antriebssystem, umfassend eine Drehstrommaschine, insbesondere eine PMSM, mit einem eine Statorwicklung aufweisenden Stator und einem Rotor.

Die Drehstrommaschine umfasst wenigstens eine erste Spannungsmessvorrichtung zur Erfassung wenigstens zweier Netzspannungen eines zum Antreiben der Drehstrommaschine vorgesehenen Drehstromnetzes. Die Drehstrommaschine umfasst wenigstens eine zweite Spannungsmessvorrichtung zur Erfassung wenigstens zweier Klemmenspannungen der Drehstrommaschine. Und die Drehstrommaschine umfasst wenigstens eine Strommessvorrichtung zur Erfassung wenigstens zweier Statorphasenströme der Drehstrommaschine. Außerdem umfasst die Drehstrommaschine einen Drehstromsteller zum Betrieb der Drehstrommaschine. Der Drehstromsteller weist drei Kontakte zum Anschließen an die drei Phasen eines Drehstromnetzes, drei Kontakte zum Anschließen an die Statorwindungen der Drehstrommaschine, eine erste Halbleiter-Schaltungsanordnung zur Ausbildung eines in einer ersten Drehrichtung rotierenden, ersten Drehfeldes in einem Stator der Drehstrommaschine, eine zweite Halbleiter-Schaltungsanordnung zur Ausbildung eines in einer der ersten Drehrichtung entgegen gerichteten Drehrichtung rotierenden zweiten Drehfeldes im Stator der Drehstrommaschine, und eine Steuereinheit zur Steuerung der ersten und zweiten zweite Halbleiter-Schaltungsanordnung. Die Steuereinheit ist ausgestaltet zur Durchführung des oben beschriebenen Verfahrens.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: einen Schnitt durch eine beispielhafte Drehstrommaschine;
- Fig. 2: ein Konturdiagramm des maximal möglichen mittleren Drehmoments M mean in Abhängigkeit von dem Netzwinkel ϕ_grid und dem Motorwinkel ϕ_mech mit einer herkömmlichen Sanftstarteranordnung, wie z.B. in Fig. 7 dargestellt;
- Fig. 3: ein I-t- und ω_mech-t-Diagramm für ein herkömmliches Hochfahren eines PMSM;
- Fig. 4: ein Konturdiagramm des maximal möglichen mittleren Drehmoments M mean in Abhängigkeit von dem Netzwinkel ϕ_grid und dem Motorwinkel ϕ_mech mit einer erfindungsgemäß erweiterten Sanftstarteranordnung, wie z.B. in Fig. 5 und 6 dargestellt;
- Fig. 5: eine Sanftstarterschaltung mit drei schaltbaren Phasen zum Erzeugen eines mit- und gegenlaufenden Drehfelds;
- Fig. 6: eine Sanftstarterschaltung mit zwei schaltbaren Phasen zum Erzeugen eines mit- und gegenlaufenden Drehfelds; und
- Fig. 7: eine herkömmliche Sanftstarteranordnung.

Fig. 4 zeigt einen mit der vorliegenden Erfindung möglichen Drehmomentverlauf als ein Konturdiagramm des maximal möglichen mittleren Drehmoments M_mean in Abhängigkeit von dem Netzwinkel ϕ_grid des Drehstromnetzes und dem Motorwinkel ϕ_mech der Drehstrommaschine bei Wahl des optimalen Zündzeitpunktes der Thyristoren. Das in Fig. 4 dargestellte Konturdiagramm ist genauso zu lesen wie das in Fig. 2 dargestellte Konturdiagramm. Aus Gründen der Übersichtlichkeit wurde in Fig. 4 auf die den Zeitverlauf angebenden Pfeile, die in Fig. 2 eingezeichnet sind, verzichtet.

Um die Pulslücken 31 in Fig. 3 überbrücken zu können, wird erfindungsgemäß eine Topologieanpassung vorgenommen. Dadurch wird es möglich, auch ein zur Drehrichtung des Motors gegenläufiges Drehfeld im Stator anzulegen. Aus Fig. 4 wird deutlich, dass durch das in einer der ersten Drehrichtung entgegen gerichteten Drehrichtung rotierende zweite Drehfeld im Stator die "Drehmomenttäler" durch quer dazu verlaufende, neu hinzugekommene "Drehmomentberge" teilweise kompensiert werden. Entsprechend ergänzen sich die Flächen, in denen positives Drehmoment erzeugt werden kann, und es gibt keine langen zeitlichen Bereiche mehr, in denen keine Zündung möglich ist. Es ist zwar kein kontinuierliches Zünden, wie es im ersten Winkelabschnitt mit ϕ_mech = 0 bis 50 Grad der Fall ist, möglich, aber es gibt immer wieder Zeitpunkte, in denen ein positives Drehmoment zur Stützung der Drehzahl verfügbar ist. t2 ist ein Beispiel für einen Zeitpunkt, in dem durch das hinzugefügte gegenlaufende Drehfeld ein positives Drehmoment möglich ist. Da diese hinzugekommenen Drehmomentberge, die durch das gegenlaufende Drehfeld generiert werden, positive Drehmomente zur Folge haben, kann der Motor durch diese weiter beschleunigt werden - die in Fig. 3 abgebildeten Pulslücken 31 verschwinden hierdurch nahezu.

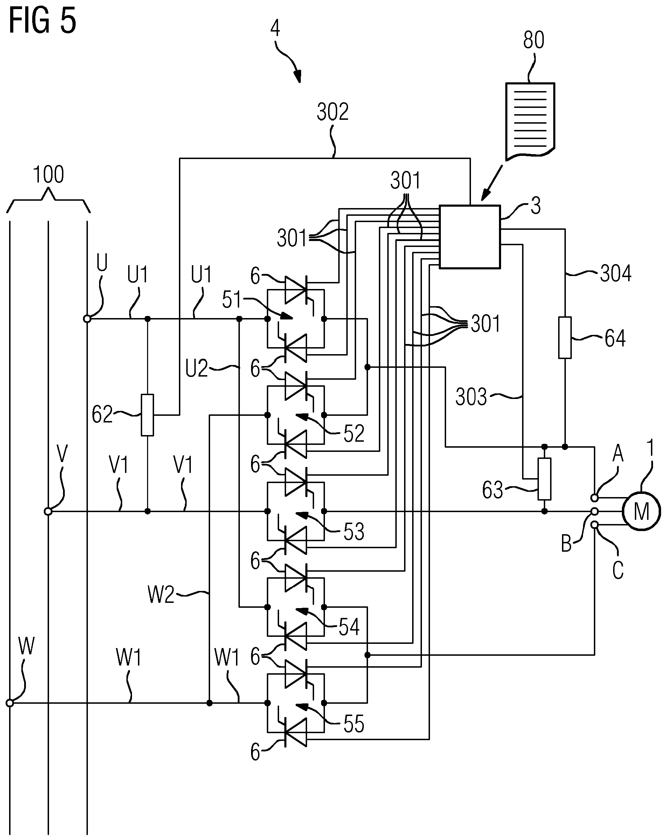

Figur 5 zeigt eine Sanftstarterschaltung mit drei schaltbaren Stromphasen zum Erzeugen eines mit- und gegenlaufenden Drehfelds. Die Phasenanschlüsse A, B, C einer Drehstrom-Synchronmaschine 1, insbesondere einer permanenterregten Synchronmaschine, sind an einen dreiphasigen Drehstromsteller 4 angeschlossen. Der Drehstromsteller 4 ist mittels Phasenanschlüssen U, V, W mit den Phasen eines dreiphasigen Drehstromnetzes 100 leitend verbunden. Die Drehstrom-Synchronmaschine 1 umfasst einen Rotor und einen an das Drehstromnetz angeschlossenen Stator mit einer dreiphasigen Statorwicklung mit Phasenanschlüssen A, B, C.

In Phasenleitungen U1, V1, W1, welche jeweils die Phasenanschlüsse U, V, W des Drehstromsteller 4 mit den Phasenanschlüssen A, B, C der Drehstrom-Synchronmaschine 1 verbinden, ist jeweils ein Halbleitermodul 51, 53, 55 aus jeweils zwei antiparallel geschalteten Thyristoren 6 geschaltet. Somit ist der Stator über eine erste Halbleiter-Schaltungsanordnung 51, 53, 55 zur Ausbildung eines in einer ersten Drehrichtung rotierenden, ersten Drehfeldes im Stator mit dem Drehstromnetz verbunden.

Darüber hinaus sind in Phasenleitungen U2, W2, welche jeweils die Phasenanschlüsse U, W des Drehstromsteller 4 mit den Phasenanschlüssen C, A der Drehstrom-Synchronmaschine 1 verbinden, jeweils ein Halbleitermodul 52, 54 aus jeweils zwei antiparallel geschalteten Thyristoren 6 geschaltet. Somit ist der Stator über eine zweite Halbleiter-Schaltungsanordnung 52, 53, 54 zur Ausbildung eines in einer der ersten Drehrichtung entgegen gerichteten Drehrichtung rotierenden zweiten Drehfeldes im Stator mit dem Drehstromnetz verbunden.

Die Zündelektroden der Thyristoren 6 sind an eine Steuereinrichtung 3 angeschlossen, von der die zum Zünden der Thyristoren 6 erforderlichen Zündsignale bereitgestellt werden. Die Steuereinrichtung 3 ist durch einen Mikrocontroller realisiert.

Zwischen zwei Phasen des Drehstromnetzes, beispielsweise zwischen den Phasenanschlüssen U und V des Drehstromstellers 4 in Fig. 5, ist auf der Netzseite der Halbleitermodule 51, 52, 53, 54, 55 eine erste Spannungsmessvorrichtung 62, z.B. ein Spannungsmessgerät in Form eines Spannungsmessumformers, geschaltet, an deren Ausgang der Messwert der zwischen diesen beiden Klemmen U und V anliegenden Netzspannung bereitsteht. Weitere, nicht gezeigte Spannungsmessvorrichtungen zur Erfassung der zwischen dem Phasenpaar U, W und dem Phasenpaar V, W anliegenden Netzspannung können ebenfalls vorhanden sein.

Zwischen zwei Phasenanschlüssen A, B, C des Drehstrommotors 1, beispielsweise zwischen den Klemmen A und B des Drehstrommotors 1 in Fig. 5, ist auf der Motorseite der Halbleitermodule 51, 52, 53, 54, 55 eine zweite Spannungsmessvorrichtung 63 geschaltet, an deren Ausgang der Messwert der zwischen diesen beiden Klemmen A und B anliegende Motorspannung, auch Klemmenspannung genannt, bereitsteht. Weitere, nicht gezeigte Spannungsmessvorrichtungen zur Erfassung der zwischen dem Anschlusspaar A, C und dem Anschlusspaar B, C anliegenden Motorspannung, auch Klemmenspannung genannt, können ebenfalls vorhanden sein.

An den Phasenanschluss A des Drehstrommotors 1 ist auf der Motorseite der Halbleitermodule 51, 52, 53, 54, 55 eine Strommessvorrichtung 64, z.B. ein Strommessgerät in Form eines Stromwandlers oder eines Strommesswiderstands, geschaltet. Am Ausgang der Strommessvorrichtung 64 steht der Messwert des durch diesen Phasenanschluss A fließenden Statorphasenstroms, auch Strangstrom genannt, bereit. Weitere, nicht gezeigte Strommessvorrichtungen zur Erfassung des durch die Phasenanschlüsse B und C fließenden Statorphasenstroms können ebenfalls vorhanden sein.

Alternativ ist es auch möglich, dass die Strommessvorrichtung 64 auf der Netzseite der Halbleitermodule 51, 52, 53, 54, 55 angeordnet ist, so dass am Ausgang der Strommessvorrichtung 64 der Messwert des in der Phasenleitung U1 fließenden Stroms bereitsteht. Weitere, nicht gezeigte Strommessvorrichtungen zur Erfassung des in den Phasenleitungen V1 und W1 fließenden Stroms können ebenfalls vorhanden sein.

In einer Ausführungsvariante sind die Steuereinrichtung 3 und der Drehstromsteller 4 eine von der Drehstrom-Synchronmaschine 1 separate Einheit, also als separate Motorsteuereinrichtung realisiert. In einer zweiten Ausführungsvariante sind die Steuereinrichtung 3 und der Drehstromsteller 4 Teil der Drehstrom-Synchronmaschine 1. In diesem Fall sind zweckmäßig die Funktionen der Steuereinrichtung 3 in einen bereits vorhandenen Mikroprozessor in der Drehstrom-Synchronmaschine 1 integriert. Im vorliegenden Ausführungsbeispiel dient die Steuereinrichtung 3 dazu, ein geeignetes Programm zu bearbeiten, mit dem softwaremäßig der Betrieb der Einrichtung erfolgen kann.

Zur Beschleunigung der Synchronmaschine 1 aus dem Stillstand ist beschleunigendes Drehmoment erforderlich. Hierfür ist es notwendig, die Statorwicklung derart zu bestromen, dass positives Drehmoment (inneres Drehmoment) erzeugt wird, welches sowohl eine Beschleunigung der Maschine 1 bewirkt als auch das Gegenmoment der Last kompensiert.

Um durch Zündung der Thyristoren 6 zu einem bestimmten Zeitpunkt Statorströme zu erzeugen, die einen günstigen Drehmomentverlauf liefern, werden die Statorströme und das Drehmoment für bestimmte Parameterkonstellationen berechnet. Die verwendeten Parameter sind die Phasenlage der von der ersten Spannungsmessvorrichtung 62 gemessenen und als Messwert von dort über eine Messwertleitung 302 zur Steuereinrichtung 3 übertragenen Netzspannung, die Phasenlage der von der zweiten Spannungsmessvorrichtung 63 gemessenen und als Messwert von dort über eine Messwertleitung 303 zur Steuereinrichtung 3 übertragenen, durch den Rotor induzierten Motorspannung, sowie die von der Stromvorrichtung 64 gemessenen und als Messwert von dort über eine Messwertleitung 304 zur Steuereinrichtung 3 übertragenen Statorphasenströme.

Aus den beiden entgegengesetzt rotierenden Drehfeldern im Stator werden diejenigen Zündzeitpunkte für eine Zündung der Thyristoren 6 gewählt, welche ein positives Drehmoment im Motor 1 hervorrufen. Dazu stellt die Steuereinheit 3 die Halbleiter so, dass der Rotor L durch Strompulse sowohl des ersten als auch des zweiten Drehfeldes in der ersten Drehrichtung beschleunigt wird. Dieses Verfahren ist durch ein Computerprogrammprodukt 80 umsetzbar, das in der Steuereinheit 3 ausführbar ist.

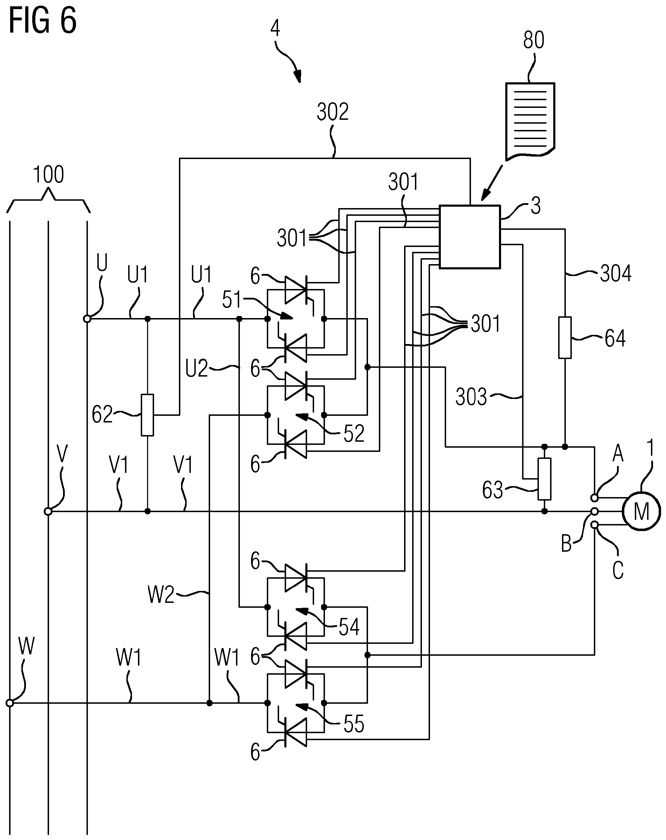

Figur 6 zeigt eine Sanftstarterschaltung mit zwei schaltbaren Phasen zum Erzeugen eines mit- und gegenlaufenden Drehfelds. Das oben zu Fig. 5 Gesagte gilt hier analog, außer dass die in Fig. 6 dargestellten Sanftstarterschaltung die mittlere Phase V ungeschaltet lässt, d. h. in die Phasenleitung V1, welche die Phase V des Drehstromnetzes mit dem Phasenanschluss B der Drehstrom-Synchronmaschine 1 verbindet, ist kein Halbleitermodul zum Öffnen bzw. Sperren der Phasenleitung V1 geschaltet.

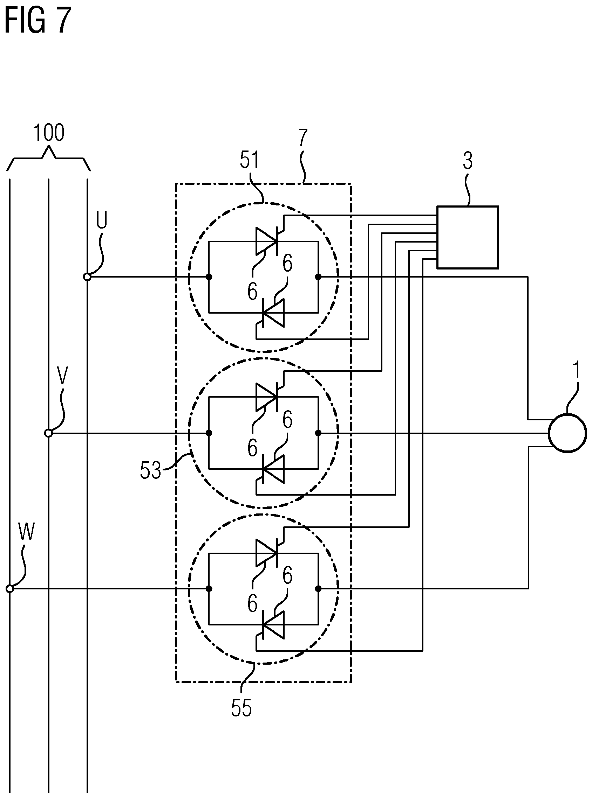

Fig. 7 zeigt eine herkömmliche Sanftstarteranordnung, wie sie heutzutage für Asynchronmaschinen 1 vielfach Anwendung findet. Die 3-phasige Sanftstarteranordnung ist zwischen ein 3-phasiges Drehstromnetz 100 und eine 3-phasige Drehstrommaschine 1 geschaltet. Die Sanftstarteranordnung weist eine Halbleiterschaltungsanordnung 7 mit Halbleitermodulen 51, 53, 55, welche jeweils zwei antiparallel geschaltete Thyristoren 6 aufweisen, auf. Die Sanftstarteranordnung ist mittels dreier Phasenanschlüsse U, V, W mit den drei Phasen des Drehstromnetzes 100 elektrisch verbunden. Die drei Phasen des Drehstromnetzes 100 sind durch entsprechende Phasenleitungen des Sanftstarteranordnung mit den Klemmen einer Drehstrommaschine elektrisch verbindbar, wobei die besagten Phasenleitungen jeweils durch ein Halbleitermodul 51, 53, 55, welches einen leitenden oder einen sperrenden Zustand einnehmen kann, geschaltet werden können. Dazu sind Zündelektroden der Thyristoren 6 an eine Steuereinrichtung 3 angeschlossen, von der die zum Zünden der Thyristoren 6 erforderlichen Zündsignale bereitgestellt werden. Durch ein geeignetes Ansteuern der Halbleitermodule 51, 53, 55 (Durchlassen oder Sperren) werden die Phasen des Drehstromnetz 100 in einer solchen zeitlichen Weise mit den Statorwindungen der Drehstrommaschine 1 elektrisch verbunden, dass der gewünschte Betrieb der Drehstrommaschine 1 erzielt wird.

## Patentansprüche

1. Verfahren zum Betreiben einer Drehstrommaschine (1), insbesondere einer permanenterregten Synchronmaschine, die einen Rotor (L) und einen an ein Drehstromnetz (100) angeschlossenen Stator (St) mit einer dreiphasigen Statorwicklung aufweist,
wobei der Stator (St) über eine erste Halbleiter-Schaltungsanordnung (51, 53, 55) zur Ausbildung eines in einer ersten Drehrichtung rotierenden, ersten Drehfeldes im Stator (St) und über eine zweite Halbleiter-Schaltungsanordnung (52, 53, 54) zur Ausbildung eines in einer der ersten Drehrichtung entgegen gerichteten Drehrichtung rotierenden zweiten Drehfeldes im Stator (St) mit dem Drehstromnetz (100) verbunden ist,
wobei die Drehstrommaschine (1) außerdem eine Steuereinheit (3) zum Stellen der Halbleiter der ersten und der zweiten Halbleiter-Schaltungsanordnung aufweist,
**dadurch gekennzeichnet, dass** die Steuereinheit (3) die Halbleiter so stellt, dass der Rotor (L) durch Strompulse sowohl des ersten als auch des zweiten Drehfeldes in der ersten Drehrichtung beschleunigt wird,
wobei durch das zweite Drehfeld zusätzliche Zeitpunkte zum Stellen der Halbleiter zur Verfügung stehen, in denen der Rotor (L) in der ersten Drehrichtung beschleunigt werden kann.

2. Verfahren nach Anspruch 1, wobei nur zwei Phasen (U, W) des Drehstromnetzes (100) durch die erste und zweite Halbleiter-Schaltungsanordnung (51, 52, 54, 55) stellbar sind.

3. Verfahren nach Anspruch 1, wobei die Drehstrommaschine (1) eine permanenterregte Synchronmaschine ist.

4. Verfahren nach Anspruch 3, wobei die Drehstrommaschine (1) eine permanenterregte Synchronmaschine mit einem Dämpferkäfig ist.

5. Drehstromsteller (4) zum Betrieb einer Drehstrommaschine (1), insbesondere einer permanenterregten Synchronmaschine, mit
- drei Kontakten (U, V, W) zum Anschließen an die Phasen eines Drehstromnetzes (100);
- drei Kontakten (A, B, C) zum Anschließen an die Statorwindungen der Drehstrommaschine (1)
- einer ersten Halbleiter-Schaltungsanordnung (51, 53, 55) zur Ausbildung eines in einer ersten Drehrichtung rotierenden, ersten Drehfeldes in einem Stator (St) der Drehstrommaschine (1);
- einer zweiten Halbleiter-Schaltungsanordnung (52, 53, 54) zur Ausbildung eines in einer der ersten Drehrichtung entgegen gerichteten Drehrichtung rotierenden zweiten Drehfeldes im Stator (St) der Drehstrommaschine (1); und
- einer Steuereinheit (3) zur Steuerung der ersten und zweiten Halbleiter-Schaltungsanordnung, die ausgestaltet ist zur Durchführung des Verfahrens gemäß einem der Ansprüche 1 bis 4.

6. Computerprogrammprodukt, das in einer Steuereinheit (3) ausführbar ist, **dadurch gekennzeichnet, dass** das Computerprogrammprodukt Befehle umfasst, die bewirken, dass der Drehstromsteller (4) des Anspruchs 5 das Verfahren nach einem der Ansprüche 1 bis 4 ausführt.

7. Drehstromsteller (4) nach Anspruch 5 bei der die Steuereinheit (3) ein Mikroprozessor ist.

8. Antriebssystem, umfassend
- eine Drehstrommaschine (1), insbesondere eine Permanenterregte Synchronmaschine (1), mit einem eine Statorwicklung aufweisenden Stator (St) und einem Rotor (L),
- wenigstens eine erste Spannungsmessvorrichtung (62) zur Erfassung wenigstens zweier Netzspannungen eines zum Antreiben der Drehstrommaschine (1) vorgesehenen Drehstromnetzes (100),
- wenigstens eine zweite Spannungsmessvorrichtung (63) zur Erfassung wenigstens zweier Klemmenspannungen der Drehstrommaschine (1),
- wenigstens eine Strommessvorrichtung (64) zur Erfassung wenigstens zweier Statorphasenströme der Drehstrommaschine (1), und
- einen Drehstromsteller (4) nach einem der Ansprüche 5 oder 7 .

## Claims

1. Method for operating a three-phase machine (1), in particular a permanent-magnet synchronous machine, which has a rotor (L) and a stator (St), connected to a three-phase network (100), having a three-phase stator winding,
the stator (St) being connected to the three-phase network (100) via a first semiconductor circuit arrangement (51, 53, 55) for forming a first rotational field rotating in a first direction of rotation in the stator (St) and via a second semiconductor circuit arrangement (52, 53, 54) for forming a second rotational field rotating in a direction of rotation opposite to the first direction of rotation in the stator (St), the three-phase machine (1) further having a control unit (3) for setting the semiconductors of the first and second semiconductor circuit arrangement,
**characterized in that** the control unit (3) sets the semiconductors such that the rotor (L) is accelerated by current pulses of both the first and second rotational field in the first direction of rotation,
the second rotational field providing additional times for setting the semiconductors, in which the rotor (L) can be accelerated in the first direction of rotation.

2. Method according to Claim 1, wherein only two phases (U, W) of the three-phase network (100) are settable by the first and second semiconductor circuit arrangement (51, 52, 54, 55).

3. Method according to Claim 1, wherein the three-phase machine (1) is a permanent-magnet synchronous machine.

4. Method according to Claim 3, wherein the three-phase machine (1) is a permanent-magnet synchronous machine having a damper cage.

5. Three-phase controller (4) for operating a three-phase machine (1), in particular a permanent-magnet synchronous machine, having
- three contacts (U, V, W) for connection to the phases of a three-phase network (100);
- three contacts (A, B, C) for connection to the stator windings of the three-phase machine (1);
- a first semiconductor circuit arrangement (51, 53, 55) for forming a first rotational field rotating in a first direction of rotation in a stator (St) of the three-phase machine (1);
- a second semiconductor circuit arrangement (52, 53, 54) for forming a second rotational field rotating in a direction of rotation opposite to the first direction of rotation in the stator (St) of the three-phase machine (1); and
- a control unit (3) for controlling the first and second semiconductor circuit arrangement, which is configured for performing the method according to one of Claims 1 to 4.

6. Computer program product which is executable in a control unit (3), **characterized in that** the computer program product comprises commands which cause the three-phase controller (4) of Claim 5 to perform the method according to one of Claims 1 to 4.

7. Three-phase controller (4) according to Claim 5, in which the control unit (3) is a microprocessor.

8. Drive system, comprising
- a three-phase machine (1), in particular a permanent-magnet synchronous machine (1), having a stator (St) having a stator winding and a rotor (L),
- at least one first voltage measuring device (62) for detecting at least two network voltages of a three-phase network (100) provided for driving the three-phase machine (1),
- at least one second voltage measuring device (63) for detecting at least two terminal voltages of the three-phase machine (1),
- at least one current measuring device (64) for detecting at least two stator phase currents of the three-phase machine (1), and
- a three-phase controller (4) according to either of Claims 5 and 7.

## Revendications

1. Procédé pour faire fonctionner une machine (1) triphasée, notamment une machine synchrone à excitation permanente, qui a un rotor (L) et un stator (St) raccordé à un réseau (100) triphasé et ayant un enroulement de stator triphasé,
dans lequel le stator (St) est relié au réseau (100) triphasé par un premier montage (51, 53, 55) de semi-conducteurs pour la constitution dans le stator (St) d'un premier champ tournant dans un premier sens de rotation et par un deuxième montage (52, 53, 54) de semi-conducteurs pour la constitution dans le stator (St) d'un deuxième champ tournant, tournant dans un sens de rotation contraire au premier sens de rotation,
dans lequel la machine (1) triphasée a en outre une unité (3) de commande pour régler les semi-conducteurs des premier et deuxième montages de semi-conducteurs,
**caractérisée en ce que** l'unité (3) de commande règle les semi-conducteurs de manière à accélérer le rotor (L) par des impulsions de courant à la fois du premier et du deuxième champ tournant dans le premier sens de rotation,
dans lequel on met à disposition par le deuxième champ tournant des instants supplémentaires de réglage des semi-conducteurs, dans lesquels le rotor (L) peut être accéléré dans le premier sens de rotation.

2. Procédé suivant la revendication 1, seulement deux phases (U, W) du réseau (100) triphasé peuvent être réglées par le premier et le deuxième montage (51, 52, 54, 55) de semi-conducteurs.

3. Procédé suivant la revendication 1, dans lequel la machine (1) triphasée est une machine synchrone à excitation permanente.

4. Procédé suivant la revendication 3, dans lequel la machine (1) triphasée est une machine synchrone à excitation permanente ayant une cage d'amortissement.

5. Régulateur (4) triphasé pour faire fonctionner une machine (1) triphasée, notamment une machine synchrone à excitation permanente, comprenant
- trois contacts (U, V, W) de raccordement aux phases d'un réseau (100) triphasé ;
- trois contacts (A, B, C) de raccordement aux enroulements de stator de la machine (1) triphasée ;
- un premier montage (51, 53, 55) de semi-conducteurs pour la constitution dans un stator (St) de la machine (1) triphasée d'un premier champ tournant, tournant dans un premier sens de rotation ;
- un deuxième montage (52, 53, 54) de semi-conducteurs pour la constitution dans le stator (St) de la machine (1) triphasée d'un deuxième champ tournant, tournant dans le sens de rotation contraire au premier sens de rotation ; et
- une unité (3) de commande du premier et du deuxième montage de semi-conducteurs, qui est conformée pour effectuer le procédé suivant l'une des revendications 1 à 4.

6. Produit de programme d'ordinateur, qui peut être réalisé dans une unité (3) de commande, **caractérisé en ce que** le produit de programme d'ordinateur comprend des instructions, qui font que le régulateur (4) triphasé de la revendication 5 effectue le procédé suivant l'une des revendications 1 à 4.

7. Régulateur (4) triphasé suivant la revendication 5, dans lequel l'unité (3) de commande est un microprocesseur.

8. Système d'entraînement comprenant
- une machine (1) triphasée, notamment une machine (1) synchrone à excitation permanente, ayant un stator (St) comportant un enroulement de stator et un rotor (L),
- au moins un premier système (62) de mesure de la tension pour détecter au moins deux tensions d'un réseau (100) triphasé prévu pour l'entraînement de la machine (1) triphasée,
- au moins un deuxième système (63) de mesure de la tension pour détecter au moins deux tensions aux bornes de la machine (1) triphasée,
- au moins un système (64) de mesure de la tension pour détecter au moins deux courants de phase statoriques de la machine (1) triphasée, et
- un régulateur (4) triphasé suivant l'une des revendications 5 ou 7.
